# EUROPEAN PATENT SPECIFICATION

(11) **EP 3 795 812 B1**
(45) Date of publication and mention of the grant of the patent: **14.02.2024**
(21) Application number: 20172476.2
(22) Date of filing: 30.04.2020
(51) Int. Cl.: F02C 7/18

(54) **DIFFUSER CASE HEAT EXCHANGER**
DIFFUSORGEHÄUSEWÄRMETAUSCHER
ÉCHANGEUR DE CHALEUR DE CARTER DE DIFFUSEUR

(30) Priority: 02.05.2019 US 201962841980 P
(43) Date of publication of application: 24.03.2021
(73) Proprietor: RTX Corporation, Farmington, CT 06032 (US)
(72) Inventor: STILLMAN, William P., Sturbridge, MA 01566 (US); DISORI, Michael A., Glastonbury, CT 06033 (US); HYLAND, Dave J., Portland, CT 06480 (US)
(74) Representative: Dehns

(56) References cited:
- EP-A1- 3 115 588
- EP-A1- 3 196 441
- EP-A2- 3 066 321
- US-A- 5 269 133
- US-A1- 2007 245 739

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section.

Temperatures within hot sections of the gas turbine engine are cooled by air bleed from cooler upstream locations such as the compressor or diffuser. A heat exchanger maybe utilized to further cool the cooling air.

Turbine engine manufacturers continue to seek further improvements to engine performance including improvements to thermal and propulsive efficiencies.

EP 3196441 A1 describes methods and systems for cooling airflow comprising a gas turbine engine comprising an engine core, comprising a chamber, and/or a heat exchanger.

US 5269133 A1 describes a heat exchanger for cooling turbine components of a gas turbofan engine in which air to be cooled is directed along a first annular, radially extending path away from the engine and cooled by bypass air.

US 2007/0245739 A1 describes a further heat exchanger of a turbofan engine.

### SUMMARY

According to an aspect, there is provided a gas turbine engine as recited in claim 1.

In a further embodiment of the foregoing gas turbine engine, the diffuser case is disposed about a combustor and includes a forward flange for attachment to a forward case and an aft flange for attachment to an aft case.

In a further embodiment of any of the foregoing gas turbine engines, the heat exchanger portion comprises a plurality of passages defined within the diffuser case.

In a further embodiment of any of the foregoing gas turbine engines, the plurality of passages includes a first plurality of passages for the bypass flow and a second plurality of passages for a bleed airflow communicated from a diffuser surrounding the combustor.

In a further embodiment of any of the foregoing gas turbine engines, a heat exchanger inlet for directing a flow of bleed air into the heat exchanger portion axially aft of a heat exchanger outlet such that the bleed airflow flows in an axially forward direction opposite a direction of the bypass flow within the bypass duct.

In a further embodiment of any of the foregoing gas turbine engines, a mixing chamber receives cooled bleed airflow from the heat exchanger outlet.

In a further embodiment of any of the foregoing gas turbine engines, an onboard injector is in communication with mixing chamber for directing cooled bleed airflow to a turbine section.

In a further embodiment of any of the foregoing gas turbine engines, an outlet valve controls exhaust airflow through the outlet passage.

In a further embodiment of any of the foregoing gas turbine engines, an inlet actuator controls the bypass flow in to the inlet.

In a further embodiment of any of the foregoing gas turbine engines, the heat exchanger portion includes several heat exchanger portions spaced circumferentially about an axis of the engine.

In a further embodiment of any of the foregoing gas turbine engines, the heat exchanger portion is formed as an integral part of the diffuser case.

These and other features disclosed herein can be best understood from the following specification and drawings, the following of which is a brief description.

### BRIEF DESCRIPTION OF THE DRAWINGS

Figure 1 is a schematic view of an example gas turbine engine with a disclosed example diffuser case embodiment.
Figure 2 is a schematic view of the example as turbine engine and diffuser case.
Figure 3 is a cross-sectional view of an example diffuser case embodiment.
Figure 4 is an axial view of the example diffuser case embodiment.

### DETAILED DESCRIPTION

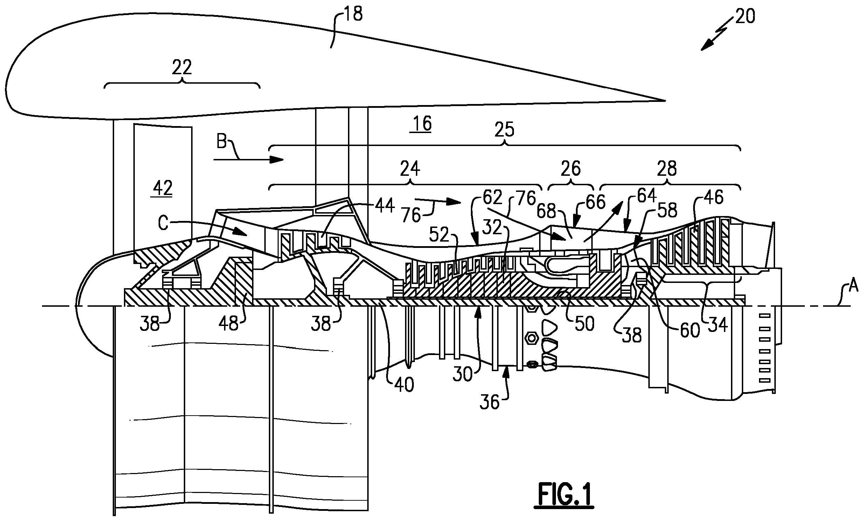

Figure 1 schematically illustrates a gas turbine engine 20. The gas turbine engine 20 is disclosed herein as a two-spool turbofan that generally incorporates a fan section 22 and a core engine section 25. The core engine section 25 includes a compressor section 24, a combustor section 26 and a turbine section 28. The fan section 22 drives air along a bypass flow path B in a bypass duct 16 defined within a nacelle 18, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that the various bearing systems 38 may alternatively or additionally be provided at different locations and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to a fan section 22 through a speed change mechanism, which in exemplary gas turbine engine 20 is illustrated as a geared architecture 48 to drive fan blades 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 58 of the engine static structure 36 may be arranged generally between the high pressure turbine 54 and the low pressure turbine 46. The mid-turbine frame 58 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils 60 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor 44 and the fan blades 42 may be positioned forward or aft of the location of the geared architecture 48 or even aft of turbine section 28.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (T(K) = T(°R) x 5/9 ). The "Low corrected fan tip speed" as disclosed herein according to one non-limiting embodiment is less than about 1150 ft / second (350.5 meters/second).

The example gas turbine engine includes the fan section 22 that comprises in one non-limiting embodiment less than about 26 fan blades 42. In another non-limiting embodiment, the fan section 22 includes less than about 20 fan blades 42. Moreover, in one disclosed embodiment the low pressure turbine 46 includes no more than about 6 turbine rotors schematically indicated at 34. In another non-limiting example embodiment, the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

The turbine section 28 generates significant amounts of heat. The components within the turbine section 28 are cooled with air bleed from cooler portions of the engine 20. Bleed air from the compressor section 24 is used for cooling portions of the turbine section 28. In some engines, the temperature of the turbine section 28 and parts of the high pressure compressor 52 are such that the bleed air requires additional cooling. The disclosed example engine 20 includes a diffuser case 66 that includes a heat exchanger 68. The heat exchanger 68 places bleed air communicated from a diffuser in thermal contact with cool bypass airflow 76. The bleed air is cooled to predefined temperature and provided to locations within the turbine section 28 and high pressure compressor 52 to maintain components within predefined operating temperature ranges. The diffuser case 66 is disposed axially aft of forward case 62 and forward of an aft case 64. In this disclosure, the terms forward and aft refer to relative orientations along the engine longitudinal axis with the fan section 22 being disposed at a forward end and the turbine section 28 being disposed at an aft end of the engine 20.

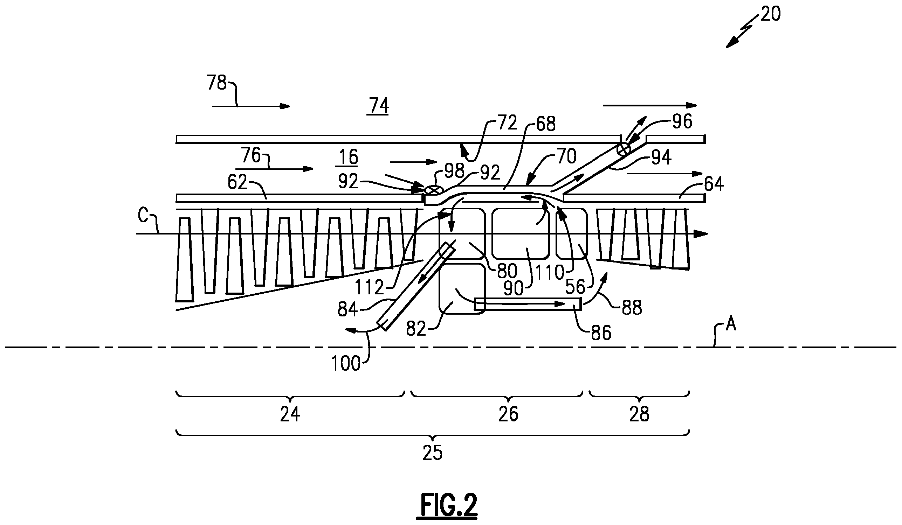

Referring to Figure 2, the example gas turbine engine 20 is shown in a simplified schematic view and includes the diffuser case 66 disposed between the forward case 62 and the aft case 64. In the disclosed example, the forward case 62 surrounds at least a portion of the compressor section 24 and the aft case surrounds a portion of the turbine section 28.

The diffuser case 66 includes the heat exchanger 68 that draws bleed air from a diffuser 90 that conditions airflow that is directed to the combustor 56. The diffuser 90 receives core airflow C from the compressor section 24 and removes nonaxial flow components prior to communication to the combustor 56. Air in the diffuser 90 is communicated to the heat exchanger 68 through a heat exchanger inlet 110 that is disposed aft of a heat exchanger outlet 112. Airflow from the outlet 112 is communicated to one or both an outer mixing chamber 80 or an inner mixing chamber 82. The example outer mixing chamber 80 communicates cooled airflow through a compressor onboard injector (COBI) 84 that provides a cooled airflow 100 to portions of the compressor section 24 that require cooling. Cooled airflow may also be communicated to a tangential onboard injector (TOBI) 86 to communicate cooled airflow 88 to an appropriate portion of the turbine section 28. It should be appreciated that although disclosed locations of cooling airflow exhausted from the heat exchanger 68 are shown by way of example other routings of cooled airflow could be utilized and are within the contemplation an scope of this disclosure.

The heat exchanger 68 is an integrated portion of the diffuser case 66 and provides a low profile intrusion into the bypass duct 16 to minimize disturbances of the bypass airflow 76. The heat exchanger 68 accepts bypass airflow 76 through an inlet 92 disposed along in inner radial surface of the duct 16. The duct 16 is defined between the inner radial surface 70 and an outer radial surface 72. The bypass airflow 76 is placed in thermal communication with the bleed airflow from the diffuser 90. The bypass airflow 76 is exhausted through an outlet 94 that opens to a location schematically shown at 74 that is radially outside the duct 16 and the outer radial surface 72. A control valve 96 is disposed within the outlet 94 to control exhaust flow and thereby cooling flow through the heat exchanger 68. The exhaust flow from the heat exchanger 68 is therefore directed radially outward of the duct 16 such that it is not reintroduced back into the duct 16. The exhausted airflow therefore does not influence nor disrupt bypass airflow within the duct 16. Instead, the exhaust flow from the heat exchanger 68 mixes with another flow 78 radially outside of the duct 16.

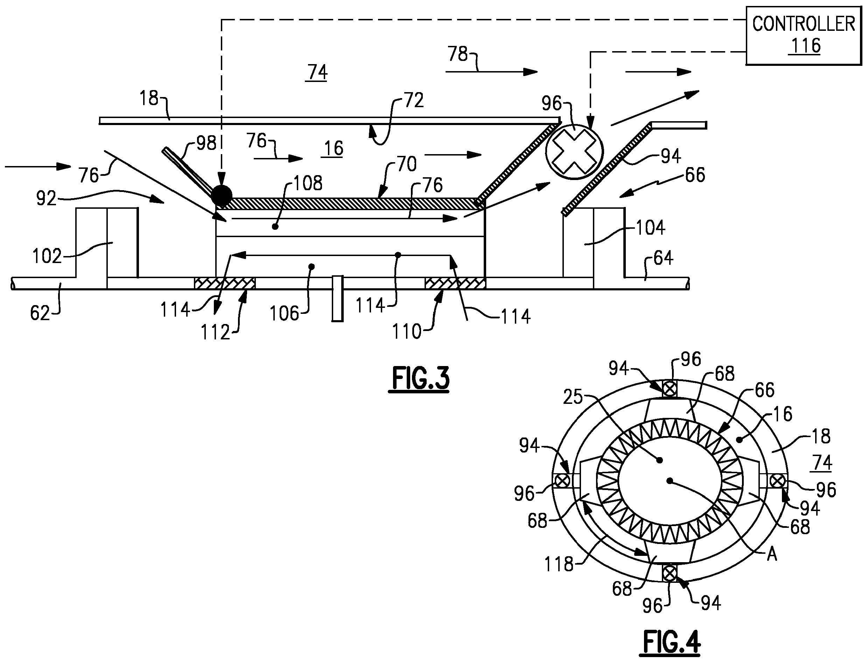

Referring to Figures 3 and 4, with continued reference to Figure 2, the example heat exchanger 68 includes a first passage 106 that extends forward from the inlet 110 to the outlet 112. Flow 114 through the first passage 106 moves axially forward to the outlet 112. A second passage 108 is provided for the cooling bypass airflow 76. Flow in the second passage begins at the inlet 92 and flows axially aft toward the outlet 94. The outlet 94 extends radially through the duct 16 to communicate exhausted bypass airflow 76 radially outside of the duct 16. In this disclosed example, radially outside of the duct 16 may be an ambient environment outside of the nacelle 18 shown in Figure 1 or may be within a secondary bypass passage.

The outlet valve 96 controls flow through the outlet 94 and thereby through the heat exchanger 68. The inlet 92 may include an actuator 98 that may close the inlet 92 and block cooling airflow through the heat exchanger 68. A controller 116 is provided to control operation of the valve 96 and the actuator 98. The controller 116 may be a separate controller or part of the overall engine or aircraft controller (Electronic Engine Control-EEC/Full Authority Digital Engine Control-FADEC). The controller 116 as referred to in this disclosure may be a hardware device for executing software, particularly software stored in memory. The controller may include a processor. The processor may be custom made or a commercially available processor, a central processing unit (CPU), an auxiliary processor among several processors associated with the computing device, a semiconductor based microprocessor (in the form of a microchip or chip set) or generally any device for executing software instructions.

The disclosed diffuser case 66 includes the outer surface 70 that defines a portion of the inner radial surface of the duct 16 between a forward flange 102 and an aft flange 104. The forward flange 102 provides for attachment to the forward case 62 and the aft flange 104 provides for attachment to the aft case 64. The outer surface 70 may be an integral portion of the diffuser case 66 or a shield provided over the heat exchanger 68. The example heat exchanger 68 may be an integral part of the diffuser case 66. The example heat exchanger 68 may also be partially integral to the diffuser case 66 and partially formed of other attached components.

The diffuser case 66 is annular about the engine longitudinal axis A and can include a plurality of heat exchanger portions 68 spaced circumferentially apart a distance 118. Each of the plurality of heat exchanger portions 68 may include outlets 94 and corresponding control valves 96. The disclosed example includes four heat exchanger portions 68, however other numbers of heat exchanger portions 68 could be utilized and are within the contemplation and scope of this disclosure.

The example diffuser case 66 and heat exchanger portion 68 may be formed using casting, additive manufacturing and machining processes.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A gas turbine engine (20) comprising:
a bypass duct (16) defining a bypass flow path (B) for a bypass airflow;
a fan section (22) configured to drive bypass airflow along the bypass flow path (B);
a core engine section including a core flow path (C) through a compressor section (24), a combustor section (26) and a turbine section (28);
a diffuser case (66) receiving a core flow from the compressor section (24) and including a heat exchanger portion (68), the diffuser case (66) including an inlet (92) in communication with the bypass flow path (B) for communicating a bypass airflow to the heat exchanger portion (68); and
**characterised by** an outlet passage (94) extending through the bypass duct (16) to exhaust airflow exiting the heat exchanger portion (68) outside of the bypass duct (16).

2. The gas turbine engine (20) as recited in claim 1, wherein the diffuser case (66) is disposed about a combustor (56) and includes a forward flange (102) for attachment to a forward case (62) and an aft flange (104) for attachment to an aft case (64).

3. The gas turbine engine (20) as recited in claim 2, wherein the heat exchanger portion (68) comprises a plurality of passages defined within the diffuser case (66).

4. The gas turbine engine (20) as recited in claim 3, wherein the plurality of passages includes a first plurality of passages for the bypass flow and a second plurality of passages for a bleed airflow communicated from a diffuser surrounding the combustor.

5. The gas turbine engine (20) as recited in claim 4, including a heat exchanger inlet (110) for directing a flow of bleed air into the heat exchanger portion (68) axially aft of a heat exchanger outlet (112) such that the bleed airflow flows in an axially forward direction opposite a direction of the bypass flow within the bypass duct (16).

6. The gas turbine engine (20) as recited in claim 5, including a mixing chamber (80) receiving cooled bleed airflow from the heat exchanger outlet (112).

7. The gas turbine engine (20) as recited in claim 6, including an onboard injector (86) in communication with mixing chamber (80) for directing cooled bleed airflow to a turbine section (28).

8. The gas turbine engine (20) as recited in any preceding claim, including an outlet valve for controlling exhaust airflow through the outlet passage (94).

9. The gas turbine engine (20) as recited in claim 8, including an inlet actuator (98) for controlling the bypass flow in to the inlet (92).

10. The gas turbine engine (20) as recited in any preceding claim, wherein the heat exchanger portion (68) includes several heat exchanger portions (68) spaced circumferentially about an axis of the engine.

11. The gas turbine engine (20) as recited in claim 10, wherein the heat exchanger portion (68) is formed as an integral part of the diffuser case (66).

## Patentansprüche

1. Gasturbinentriebwerk (20), umfassend:
einen Bypasskanal (16), der einen Bypassströmungsweg (B) für einen Bypassluftstrom definiert;
einen Lüfterabschnitt (22), der dazu konfiguriert ist, einen Bypassluftstrom entlang des Bypassströmungswegs (B) zu treiben;
einen Kerntriebwerksabschnitt, der einen Kernströmungspfad (C) durch einen Verdichterbereich (24), einen Brennkammerbereich (26) und einen Turbinenbereich (28) beinhaltet;
ein Diffusorgehäuse (66), das eine Kernströmung von dem Verdichterbereich (24) aufnimmt und einen Wärmetauscherabschnitt (68) beinhaltet, wobei das Diffusorgehäuse (66) einen Einlass (92) in Verbindung mit dem Bypassströmungsweg (B) beinhaltet, um einen Bypassluftstrom an den Wärmetauscherabschnitt (68) zu leiten; und
**gekennzeichnet durch** einen Auslassdurchgang (94), der sich durch den Bypasskanal (16) erstreckt, um den aus dem Wärmetauscherabschnitt (68) austretenden Luftstrom aus dem Bypasskanal (16) abzuleiten.

2. Gasturbinentriebwerk (20) nach Anspruch 1, wobei das Diffusorgehäuse (66) um eine Brennkammer (56) herum angeordnet ist und einen vorderen Flansch (102) zum Befestigen an einem vorderen Gehäuse (62) und einen hinteren Flansch (104) zum Befestigen an einem hinteren Gehäuse (64) aufweist.

3. Gasturbinentriebwerk (20) nach Anspruch 2, wobei der Wärmetauscherabschnitt (68) eine Vielzahl von Durchgängen umfasst, die innerhalb des Diffusorgehäuses (66) definiert ist.

4. Gasturbinentriebwerk (20) nach Anspruch 3, wobei die Vielzahl von Durchgängen eine erste Vielzahl von Durchgängen für den Bypassstrom und eine zweite Vielzahl von Durchgängen für einen Zapfluftstrom umfasst, der von einem die Brennkammer umgebenden Diffusor geleitet wird.

5. Gasturbinentriebwerk (20) nach Anspruch 4, das einen Wärmetauschereinlass (110) zum Richten eines Zapfluftstroms in den Wärmetauscherabschnitt (68) axial hinter einem Wärmetauscherauslass (112) beinhaltet, derart, dass der Zapfluftstrom in einer axialen Vorwärtsrichtung entgegen einer Richtung des Bypassstroms innerhalb des Bypasskanals (16) strömt.

6. Gasturbinentriebwerk (20) nach Anspruch 5, das eine Mischkammer (80) beinhaltet, die einen gekühlten Zapfluftstrom aus dem Wärmetauscherauslass (112) aufnimmt.

7. Gasturbinentriebwerk (20) nach Anspruch 6, das einen Bordinjektor (86) beinhaltet, der mit der Mischkammer (80) in Verbindung steht, um einen gekühlten Zapfluftstrom zu einem Turbinenabschnitt (28) zu lenken.

8. Gasturbinentriebwerk (20) nach einem der vorhergehenden Ansprüche, das ein Auslassventil zum Steuern des Abgasluftstroms durch den Auslassdurchgang (94) beinhaltet.

9. Gasturbinentriebwerk (20) nach Anspruch 8, das einen Einlassaktor (98) zum Steuern des Bypassstroms in den Einlass (92) beinhaltet.

10. Gasturbinentriebwerk (20) nach einem der vorhergehenden Ansprüche, wobei der Wärmetauscherabschnitt (68) mehrere Wärmetauscherabschnitte (68) beinhaltet, die in Umfangsrichtung um eine Achse des Triebwerks herum beabstandet sind.

11. Gasturbinentriebwerk (20) nach Anspruch 10, wobei der Wärmetauscherabschnitt (68) als ein einstückiger Bestandteil des Diffusorgehäuses (66) ausgebildet ist.

## Revendications

1. Moteur à turbine à gaz (20) comprenant :
un conduit de dérivation (16) définissant un trajet de flux de dérivation (B) pour un flux d'air de dérivation ;
une section de ventilateur (22) configurée pour entraîner un flux d'air de dérivation le long du trajet de flux de dérivation (B) ;
une section de moteur central comportant un trajet de flux central (C) à travers une section de compresseur (24), une section de chambre de combustion (26) et une section de turbine (28) ;
un carter de diffuseur (66) recevant un flux central provenant de la section de compresseur (24) et comportant une partie d'échangeur de chaleur (68), le carter de diffuseur (66) comportant une entrée (92) en communication avec le trajet de flux de dérivation (B) pour communiquer un flux d'air de dérivation à la partie d'échangeur de chaleur (68) ; et
**caractérisé par** un passage de sortie (94) s'étendant à travers le conduit de dérivation (16) pour évacuer le flux d'air sortant de la partie d'échangeur de chaleur (68) à l'extérieur du conduit de dérivation (16).

2. Moteur à turbine à gaz (20) selon la revendication 1, dans lequel le carter de diffuseur (66) est disposé autour d'une chambre de combustion (56) et comporte une bride avant (102) pour la fixation à un carter avant (62) et une bride arrière (104) pour la fixation à un carter arrière (64).

3. Moteur à turbine à gaz (20) selon la revendication 2, dans lequel la partie d'échangeur de chaleur (68) comprend une pluralité de passages définie à l'intérieur du carter de diffuseur (66).

4. Moteur à turbine à gaz (20) selon la revendication 3, dans lequel la pluralité de passages comporte une première pluralité de passages pour le flux de dérivation et une seconde pluralité de passages pour un flux d'air de prélèvement communiqué depuis un diffuseur entourant la chambre de combustion.

5. Moteur à turbine à gaz (20) selon la revendication 4, comportant une entrée d'échangeur de chaleur (110) pour diriger un flux d'air de prélèvement dans la partie d'échangeur de chaleur (68) axialement à l'arrière d'une sortie d'échangeur de chaleur (112) de telle sorte que le flux d'air de prélèvement s'écoule dans une direction axialement vers l'avant opposée à une direction du flux de dérivation à l'intérieur du conduit de dérivation (16).

6. Moteur à turbine à gaz (20) selon la revendication 5, comportant une chambre de mélange (80) recevant un flux d'air de prélèvement refroidi provenant de la sortie de l'échangeur de chaleur (112).

7. Moteur à turbine à gaz (20) selon la revendication 6, comportant un injecteur embarqué (86) en communication avec la chambre de mélange (80) pour diriger le flux d'air de prélèvement refroidi vers une section de turbine (28).

8. Moteur à turbine à gaz (20) selon une quelconque revendication précédente, comportant une soupape de sortie pour commander le flux d'air d'échappement à travers le passage de sortie (94).

9. Moteur à turbine à gaz (20) selon la revendication 8, comportant un actionneur d'entrée (98) pour commander le flux de dérivation dans l'entrée (92).

10. Moteur à turbine à gaz (20) selon une quelconque revendication précédente, dans lequel la partie d'échangeur de chaleur (68) comporte plusieurs parties d'échangeur de chaleur (68) espacées de manière circonférentielle autour d'un axe du moteur.

11. Moteur à turbine à gaz (20) selon la revendication 10, dans lequel la partie d'échangeur de chaleur (68) est formée d'un seul tenant avec le carter de diffuseur (66).
